(19) **Europäisches Patentamt**
**European Patent Office**
**Office européen des brevets**

(11) **EP 3 852 236 A1**

(12) **EUROPEAN PATENT APPLICATION**

(43) Date of publication:
21.07.2021 Bulletin 2021/29

(51) Int Cl.:
**H02J 50/10** (2016.01)

(21) Application number: **20162769.2**

(22) Date of filing: **12.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **17.01.2020 JP 2020005971**

(71) Applicant: **Showa Aircraft Industry Co., Ltd.**
**Tokyo**
**196-8522 (JP)**

(72) Inventors:
• **Yamamoto, Kitao**
**Akishima-shi, Tokyo 196-8522 (JP)**

• **Watanabe, Hiroshi**
**Akishima-shi, Tokyo 196-8522 (JP)**
• **Mochizuki, Masashi**
**Akishima-shi, Tokyo 196-8522 (JP)**
• **Okiyoneda, Yasuyuki**
**Akishima-shi, Tokyo 196-8522 (JP)**
• **Watanabe, Atushi**
**Akishima-shi, Tokyo 196-8522 (JP)**

(74) Representative: **Zimmermann & Partner**
**Patentanwälte mbB**
**Postfach 330 920**
**80069 München (DE)**

(54) **UNDERWATER NON-CONTACT POWER SUPPLY DEVICE**

(57) A power transmission coupler void space (20) and a power transmission hose void space (21) are allowed to communicate with each other. A viscous resin (D) is sealed in each of the power transmission coupler void space (20) and the power transmission hose void space (21). A power reception coupler void space (22) and a power reception hose void space (23) are allowed to communicate with each other. A viscous resin (D) is sealed in each of the power reception coupler void space (22) and the power reception hose void space (23).

FIG.1

EP 3 852 236 A1

**Description**

## BACKGROUND OF THE INVENTION

The present invention generally relates to an underwater non-contact power supply device and more particularly to a non-contact power supply device used in water such as in the sea.

Power supply without mechanical contact with a cable etc., i.e., so-called non-contact power supply, is continuously developed for electric vehicles and smartphones, for example. For example, wireless power supply has already been put to practical use for smartphones. A wireless power supply device is called a wireless power transfer (WPT) device. A non-contact power supply device on land supplies electric power based on a mutual induction action of electromagnetic induction. Specifically, for example, a power reception coil of a power reception circuit mounted on a vehicle etc. is positioned with respect to a power transmission coil of a power transmission circuit fixed to a road surface etc., and electric power is supplied from the power transmission coil to the power reception coil with an air gap of several tens of mm to several hundred mm formed between the power transmission coil and the power reception coil.

The non-contact power supply in water is different from the non-contact power supply on land in that water is interposed in a gap between the power transmission coil and the power reception coil. The non-contact power supply in water is different from the non-contact power supply on land under atmospheric pressure in that the power transmission coil and power reception coil are disposed on the deep-sea floor in an environment where high water pressure is applied.

Specifically, referring to FIG. 2 of the present patent application, for example, when some kind of robot work is performed on a seafloor **A** for a long time, a seafloor power source base **2** disposed on the seafloor **A** is required as a power source base for supplying electric power to a diving working robot, i.e., an AUV (autonomous underwater vehicle) **1**. The seafloor power source base **2** uses a remote-controlled ROV (remotely operated vehicle) **5** connected from a mother ship 3 through a cable **4** to supply electric power to the diving working robot **1,** thereby charging a secondary battery of the diving working robot **1.**

Specifically, the seafloor power source base **2** disposed on the seafloor stores the electric power received from the mother ship **3** through charging of a secondary battery of the seafloor power source base **2.** The stored electric power is then supplied by the seafloor power source base **2** to the AUV **1** of the autonomous underwater exploration robot and stored in the secondary battery of the AUV **1.**

For supplying and transferring electric power under water (the sea) **B,** a technique of a non-contact power supply device (i.e., wireless power transfer; WPT) is essential. Specifically, a non-contact power supply technique is essentially necessary for transferring electric power between the ROV **5** and the seafloor power source base **2** and transferring electric power between the seafloor power source base **2** and the AUV **1.**

Conventional land-based and in-air non-contact power supply devices are disclosed in Japanese Laid-Open Patent Publication Nos. 2012-016106 and 2012-143106.

The following problems have been pointed out in terms of use of the conventional land-based and in-air non-contact power supply devices in the water (the sea) **B** on the seafloor **A**. First, equipment used on the seafloor is required to be able to withstand high water pressure and to be small and lightweight. For example, in development of seabed resources, electric power is supplied and transferred in the deep sea and on the seafloor **A** at a depth of **1,000** meters or more. Therefore, a coupler container including a power transmission coil for non-contact power supply and a coupler container including a power reception coil are required to be able to withstand such high water pressure in the deep sea and on the seafloor **A.**

The coupler containers are also naturally required to be lightweight and small. In other words, for example, in the design of the coupler containers, a highly strong and robust structure for increasing the pressure resistance and strength of the coupler containers results in increases in weight and size, which is undesirable for work and operation in the deep sea.

Second, consideration must be given to the fact that a permittivity of water interposed in a gap between a power transmission coil and a power reception coil is high as compared to air. Electric power transfer using the non-contact power supply is performed through electromagnetic induction coupling between the power transmission coil and the power reception coil. In the case of non-contact electric power transfer in water, water is interposed. The relative permittivity of water is far higher than that of air. Therefore, electrostatic induction coupling due to capacitance cannot be ignored. This suggests the necessity of devising a way to effectively utilize the electrostatic induction coupling in the non-contact power supply in water.

Third, a structure less affected by a change in water temperature is required so that the device can be used anywhere under the water (sea). Specifically, the permittivity of water is sensitive to and significantly changed due to a change in water temperature. Therefore, a structure reducing or avoiding an influence on capacitance, electrostatic induction coupling, and coupling coefficient is required for performing the non-contact power supply and power transfer in the deep sea or on the seafloor **A** where the water temperature is 5 °C or less.

## SUMMARY OF THE INVENTION

An object of the present invention is to provide an underwater non-contact power supply device particularly suitable for non-contact power supply in the deep sea.

The technical problem is solved in the present invention by providing
an underwater non-contact power supply device **6** supplying electric power from a power transmission coil **8** of a power transmission circuit **7** to a power reception coil **10** of a power reception circuit **9** in water while the power transmission coil **8** and the power reception coil **10** are close to and facing each other with a gap **G** formed between the power transmission coil **8** and the power reception coil **10,** the underwater non-contact power supply device **6** comprising:

> a power transmission coupler **13** including a power transmission container **12** housing the power transmission coil **8;**
> a power transmission hose **15** coupled to the power transmission container **12** and housing a power transmission lead wire **14** of the power transmission coil **8;**
> a power reception coupler **17** including a power reception container **16** housing the power reception coil **10;** and
> a power reception hose **19** coupled to the power reception container **16** and housing a power reception lead wire **18** of the power reception coil **10,** wherein
> a power transmission coupler void space **20** in the power transmission coupler **13** and a power transmission hose void space **21** in the power transmission hose **15** are allowed to communicate with each other, wherein a viscous resin **D** is sealed in each of the power transmission coupler void space **20** and the power transmission hose void space **21,** wherein
> a power reception coupler void space **22** in the power reception coupler **17** and a power reception hose void space **23** in the power reception hose **19** are allowed to communicate with each other, and wherein a viscous resin **D** is sealed in each of the power reception coupler void space **22** and the power reception hose void space **23,** or
> the underwater non-contact power supply device **6** not comprising the power transmission hose **15** or the power reception hose **19.**

The underwater non-contact power supply device and preferred examples of the present invention have the following configuration and provide effects.

> (1) Electric power is supplied from the power transmission coil to the power reception coil without contact.
> (2) The lead wires **14, 18** are respectively coupled to the power transmission coupler **13** and the power reception coupler **17.**
> (3) For example, regarding the high water pressure in the deep sea, the sealed resin **D** transmits a pressure from the void space **21, 23** of the power transmission hose **15** and/or the power reception hose **19** to the void space **20, 22** of the power transmission coupler **13** and/or the power reception coupler **17.** A typical example of the resin **D** is a silicone resin or a liquid epoxy resin. Therefore, a difference between the internal and external pressures of the power transmission coupler and/or the power reception coupler is eliminated by the resin **D.** As a result, the underwater non-contact power supply device can have the pressure resistance to high water pressure and the mechanical strength even through the device is small and lightweight.
> (4) Heat generated by the power transmission coil **8,** the power reception coil **10,** the lead wires **14, 18,** etc. is radiated into the seawater via the respective void spaces **20-23** of the viscous resin **D** sealed in the power transmission coupler **13,** the power reception coupler **17,** the power transmission hose **15,** and/or the power reception hose **19.** Therefore, the underwater non-contact power supply device exhibits excellent cooling ability due to the sealed viscous resin **D.**
> (5) The power supply is generally performed through electromagnetic induction coupling between the power transmission coil **8** and the power reception coil **10.** For the power supply in water having a high permittivity, preferably, additive-polarity magnetic coupling can be employed so as to cause a coupling coefficient of an electrostatic induction coupling component corresponding to a capacitance to have a positive effect. This enables the underwater non-contact power supply device to effectively utilize the electrostatic induction coupling for the power supply.
> (6) The permittivity of water significantly changes due to a change in water temperature. For top covers **24, 27** of the power transmission coupler and the power reception coupler, a material having a relative permittivity of less than **"10"** is preferably employed. This can reduce an influence of a change in permittivity of water due to a change in water temperature, an influence on combined capacitance with water, and an influence on the electrostatic induction coupling.

Effects and merits of the underwater contactless power supply device and the preferred examples according to the present invention are as follows. Firstly, the underwater non-contact power supply device may withstand high water pressure and is small and lightweight. When the external water pressure rises, the viscous resin **D** transmits a pressure from the void space of the power transmission hose **15** and/or the power reception hose **19** to the void space of the power transmission coupler **13** and/or the power reception coupler **17**. As a result, a difference between the internal and external pressures can be eliminated in the power transmission coupler **13** and/or the power reception coupler **17** so as to equalize the internal and external pressures of the power transmission coupler **13** and/or the power reception coupler **17** in the deep sea. Such a pressure equalizing effect of the viscous resin **D** provides an effect for sufficiently withstanding high water pressure even during non-contact power supply at a great depth of **1,000** meters or more, in the deep sea, or on the seafloor in development of seafloor resources, for example. The small and lightweight non-contact power supply device can be achieved without the need for employing a strong and robust structure for improving the pressure resistance and the strength.

The heat generated by the power transmission coil **8,** the power reception coil **10,** the lead wires **14, 18,** etc. can be radiated via the viscous resin **D** to the seawater in the external environment. Therefore, the cooling ability of the underwater non-contact power supply device is improved. This makes it possible to significantly increase a power supply amount, such as doubling the power supply amount as compared to in-air power supply. Alternatively, the size can be reduced as compared to in-air power supply at the same power supply amount.

The underwater non-contact power supply device of the present invention has the viscous resin **D** sealed therein and is therefore excellent in reliability, maintenance, safety, strength etc. The viscous resin **D** is less likely to leak to the outside and is excellent in reliability. More specifically, the viscous resin **D** is less frequently leak out, which reduces the frequency of operation of resealing the viscous resin **D**. Additionally, the resin **D** is more viscous than oil etc., has excellent heat resistance and low flammability, and is therefore excellent in safety. Furthermore, the resin is excellent in strength and cold resistance.

Secondly, an influence of water having high permittivity and an influence of electrostatic induction coupling can effectively be utilized. In the underwater non-contact power supply device, the power transmission coil **8** and the power reception coil **10** preferably employ additive-polarity magnetic coupling for electromagnetic induction coupling during power supply. This allows the coupling coefficient to have a positive effect due to the electrostatic induction coupling component of the capacitance. Specifically, the permittivity of water higher than air can be utilized to supply electric power by effectively utilizing the influence of the electrostatic induction coupling for the power transmission coil **8** and the power reception coil **10.**

Thirdly, the influence of the change in the permittivity of water due to a change in water temperature is reduced. The permittivity of water changes sensitively and significantly due to a change in water temperature. In a preferred embodiment, the top covers **24, 27** forming surfaces of the power transmission coupler **13** and the power reception coupler **17** facing each other during power supply are made of a material having a relative permittivity of less than **"10".** This provides an effect of reducing the influence of the change in the permittivity of water due to a change in water temperature, the influence on the combined capacitance with water, the influence on the electrostatic induction coupling, the influence on the coupling coefficient, etc.

In a preferred embodiment of the present invention, the power transmission hose **15** and/or the power reception hose **19** has a flexibility allowing inward and outward deformation due to a change in external water pressure. The viscous resin **D** transmits a pressure from the void space **21, 23** of the power transmission hose **15** and/or the power reception hose **19,** which contracts and deforms as the external water pressure rises, toward the power transmission coupler and/or the power reception coupler to increase the internal pressure of the void space **20, 22** of the power transmission coupler and/or the power reception coupler. Therefore, the viscous resin **D** can provide a function of equalizing the internal and external pressures in each of the power transmission coupler **13** and/or the power reception coupler **17.**

Coils preferably used for the power transmission coil **8** and the power reception coil **10** form additive-polarity magnetic coupling at the time of electromagnetic induction coupling during power supply. This allows the coupling coefficient corresponding to the electrostatic induction coupling component of the capacitance to have a positive effect.

The underwater non-contact power supply device of the present invention may have both the power transmission hose and the power reception hose or may have only one of the power transmission hose and the power reception hose. For example, only the void space in the power transmission coupler and the void space in the power transmission hose may be allowed to communicate with each other and may have the viscous resin **D** sealed therein, or only the void space in the power reception coupler and the void space in the power reception hose may be allowed to communicate with each other and may have the viscous resin **D** sealed therein.

The viscous resin **D** is sealed in the void space of the power reception coupler without the power reception hose coupled thereto or the power transmission coupler without the power transmission hose coupled thereto. The container constituting the power reception coupler without the power reception hose coupled thereto or the power transmission coupler without the power transmission hose coupled thereto preferably has a flexibility allowing inward and outward deformation and is integrally coupled to an electronic equipment container having a pressure-resistant rigid structure with mechanical strength.

Effects, merits and other objects of the present invention will become apparent from the following detailed description of preferable examples of the present invention.

## BRIEF DESCRIPTION OF THE DRAWINGS

FIG. **1** shows an explanatory cross-sectional diagram of an underwater non-contact power supply device of an embodiment of the present invention.

FIG. **2** shows a diagram for explaining an application of the underwater non-contact power supply device of the embodiment.

FIG. **3A** shows an explanatory diagram of electromagnetic induction coupling in air, showing subtractive-polarity magnetic coupling.

FIG. **3B** shows an explanatory diagram of electromagnetic induction coupling in air, showing additive-polarity magnetic coupling.

FIG. **3C** shows an explanatory diagram of electromagnetic induction coupling and electrostatic induction coupling in water, showing subtractive-polarity magnetic coupling.

FIG. **3D** shows an explanatory diagram of electromagnetic induction coupling and electrostatic induction coupling in water, showing additive-polarity magnetic coupling.

FIG. **4A** shows a graph of a circuit analysis result in water in the case of additive-polarity magnetic coupling etc.

FIG. **4B** shows a model diagram of a two-layer structure of a top cover and water.

FIG. **4C** shows a graph of combined relative permittivity.

FIG. **5** shows an explanatory cross-sectional diagram of a first modification.

FIG. **6** shows an explanatory cross-sectional diagram of a second modification.

## DETAILED DESCRIPTION OF THE PRESENT INVENTION

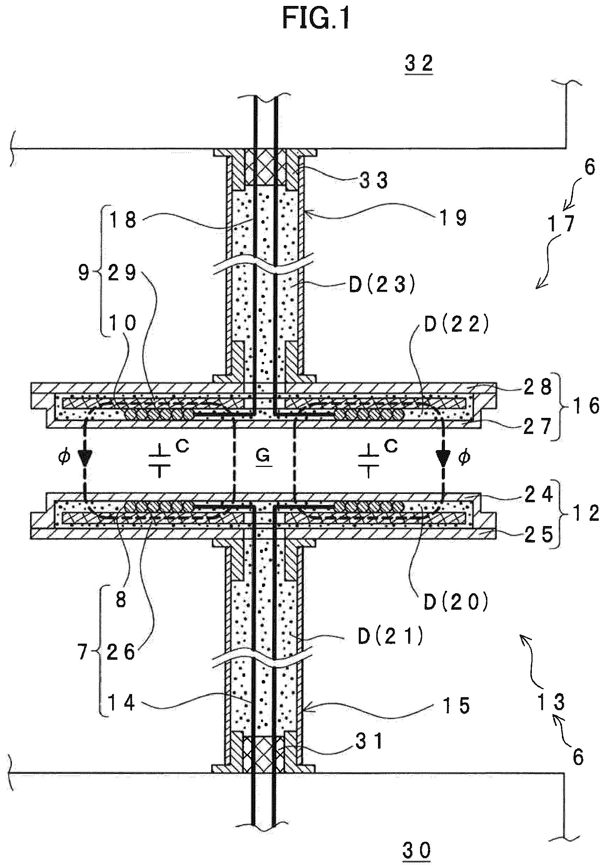

An outline and an example of an underwater non-contact power supply device of the present invention will be described with reference to FIGS. **1** to **3D**. In FIGS. **1** to **3D**, reference numeral **6** denotes an underwater non-contact power supply device of the example. As with a conventional device, the underwater non-contact power supply device **6** supplies electric power from a power transmission coil **8** of a power transmission circuit **7** to a power reception coil **10** of a power reception circuit **9** based on a mutual induction action of electromagnetic induction. The power transmission coil **8** and the power reception coil **10** are positioned close to each other. The power transmission coil **8** and the power reception coil **10** face each other across a gap **G.**

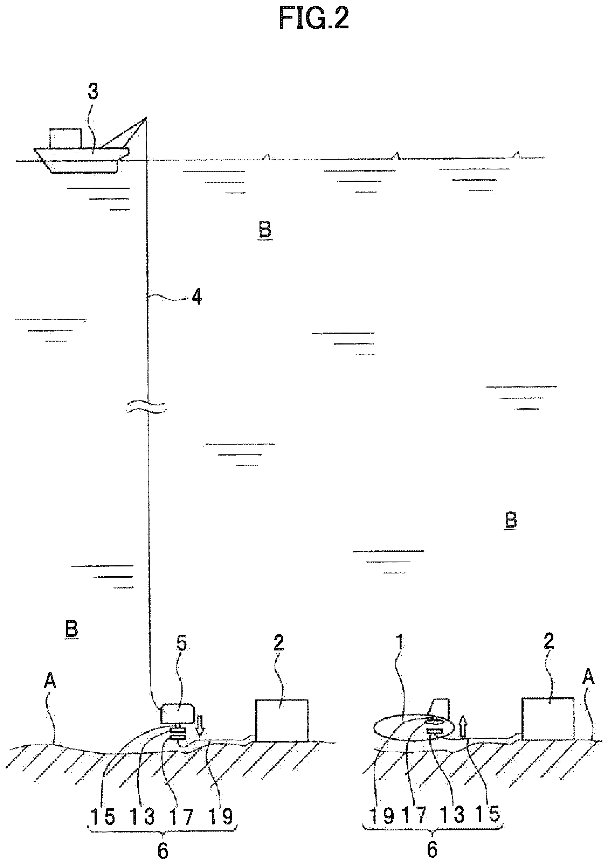

Referring to FIG. **2,** a mother ship **3** and a ROV **5** is provided with the power transmission circuit **7.** A seafloor power source base **2** is provided with the power reception circuit **9** and the power transmission circuit **7.** An AUV 1 is provided with the power reception circuit **9.** When electric power is supplied from the power transmission coil **8** of the power transmission circuit **7** to the power reception coil **10** of the power reception circuit **9,** an underwater gap (undersea gap) **G** of several tens of mm to several hundred mm is present between the power transmission coil **8** and the power reception coil **10,** and the power transmission coil 8 and the power reception coil **10** are positioned to face each other. Therefore, the underwater non-contact power supply device **6** is a device of a stop power supply type having the power reception coil **10** positioned to the fixed power transmission coil **8,** and the power reception coil **10** and the power transmission coil 8 have paired symmetric structures.

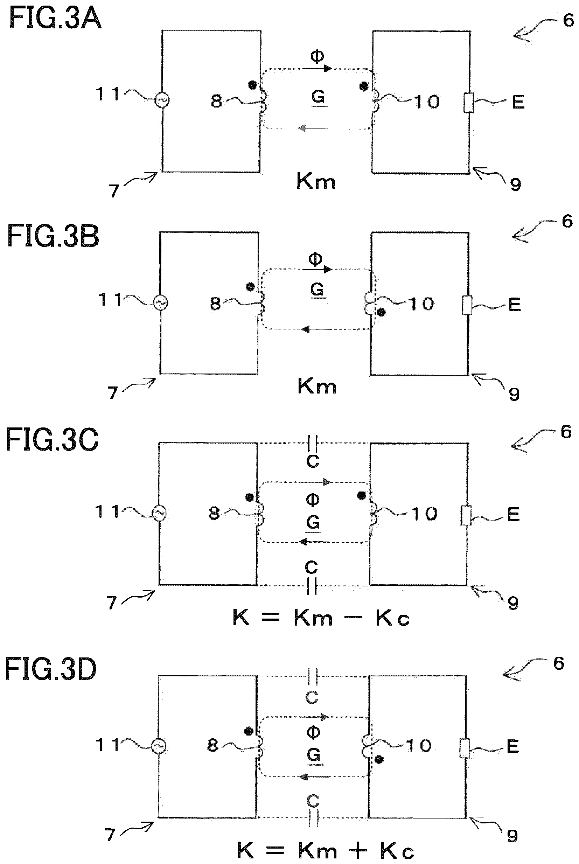

The power transmission coil **8** (FIGS. **3A-3D**) of the power transmission circuit **7** is made up of a circular coil and is connected to a high-frequency power source (power source inverter) **11.** The high-frequency power source **11** includes an inverter for exchanging frequency etc. connected to a DC power source. For example, the high-frequency power source **11** applies a high-frequency alternating current of several **kHz** to several tens of **kHz** to several hundred **kHz** toward the power transmission coil **8.**

The power reception coil **10** (FIGS. **3A-3D**) of the power reception circuit **9** is made up of a circular coil and is connected via a converter to a battery **E** constituting a secondary battery. In the AUV **1,** a traveling motor and other equipment are driven by a power source electrically stored in the battery **E.**

The mutual induction action of electromagnetic induction will be described with reference to FIGS. **3A** to **3D.** when a magnetic flux $\Phi$ is generated by the power transmission coil **8** during power supply, an induced electromotive force is correspondingly generated in the power reception coil **10.** As a result, electric power is supplied from the power transmission coil **8** to the power reception coil **10** as is known. Specifically, a self-induced electromotive force is generated by applying and supplying a feeding alternate current and an exciting current from the high-frequency power source **11** to the power transmission coil **8,** and a magnetic field is generated around the power transmission coil **8.** The magnetic flux $\Phi$ of this magnetic field is formed in a direction perpendicular to a coil surface. The magnetic flux $\Phi$ acts on the power reception coil **10** to generate an induced electromotive force in the power reception coil **10** so that a magnetic field is induced. A series of actions due to the magnetic field enables the supply of electric power of several **kW** or more to a level of several tens of **kW** to several hundred kW. A magnetic circuit of the magnetic flux Φ on the power transmission coil 8 and a magnetic circuit of the magnetic flux Φ on the power reception coil **10** also form a magnetic circuit, i.e., a magnetic path, of the magnetic flux Φ therebetween. Therefore, the power transmission coil **8** and the power reception coil **10** are electromagnetically coupled. The non-contact power supply is performed based on such a mutual induction action of electromagnetic induction.

The underwater non-contact power supply device **6** supplies electric power based on the mutual induction action of electromagnetic induction in the water **B** from the power transmission coil **8** of the power transmission circuit **7** to the power reception coil **10** of the power reception circuit **9** under a non-contact state. During the supply of electric power, the power reception coil **10** is positioned with respect to the fixed power transmission coil **8.** The gap **G** is formed between the power transmission coil **8** and the power reception coil **10** facing each other. Referring to FIG. **2,** the underwater non-contact power supply device **6** includes a power transmission coupler **13,** a power transmission hose **15,** a power reception coupler **17,** a power reception hose **19,** etc.

Referring to FIG. **1,** the power transmission coupler **13** has a power transmission container **12,** and the power transmission coil **8** is housed in the power transmission container **12.** The power transmission hose **15** is coupled to the power transmission container **12,** and a lead wire **14** of the power transmission coil **8** is housed in the power transmission hose **15.**

The power reception coupler **17** has a power reception container **16,** and the power reception coil **10** is housed in the power reception container **16.** A power reception hose **19** is connected to the power reception container **16,** and a lead wire **18** of the power reception coil **10** is housed in the power reception hose **19.**

A first void space or a power transmission coupler void space **20** in the power transmission coupler **13,** and a second void space or a power transmission hose void space **21** in the power transmission hose **15** communicate with each other, and a viscous resin **D** is sealed in the power transmission coupler void space **20** and the power transmission hose void space **21.** Similarly, a third void space or a power reception coupler void space **22** in the power reception coupler **17** and a fourth void space or a power reception hose void space **23** in the power reception hose **19** communicate with each other, and a viscous resin **D** is sealed in the power reception coupler void space **22** and the power reception hose void space **23.** In this example, the same resin **D** is sealed in the first to the fourth void spaces **22-23.**

<Power Transmission Coupler **13,** Power Reception Coupler **17**>

Referring to FIGS. **1** and **2,** the power transmission container **12** and the power reception container **16** have a shape with a substantially rectangular cross section. The power transmission container **12** has an internal storage space formed by a top cover **24** and a back plate **25,** and the power transmission coil **8** of the power transmission circuit **7** and a first ferrite core **26** are stored in this internal storage space. The top cover **24** includes a flat surface facing the power reception coupler **17.**

Similarly, the power reception container **16** has an internal storage space formed by a top cover **27** and a back plate **28,** and the power reception coil **10** of the power reception circuit **9** and a second ferrite core **29** are stored in this internal storage space. The top cover **24** of the power transmission container **12** and the top cover **27** of the power reception container **16** have respective flat surfaces facing each other. Both the first and second ferrite cores **26, 29** have a flat plate shape and each increase a coil inductance and induce the magnetic flux Φ.

The top cover **24** of the power transmission coupler **13** and the top cover **27** of the power reception coupler **17** are positioned to face each other during power supply. The top covers **24, 27** are both formed by molding a non-conductive resin (e.g., Polypenco acetal resin).

<Power Transmission Hose **15,** Power Reception Hose **19**>

The power transmission hose **15** and the power reception hose **19** will be described with reference to FIG. **1.** One end portion of the power transmission hose **15** housing the lead wire **14** between the power transmission coil **8** and the high-frequency power source **11** is coupled to the back plate **25** of the power transmission container **12.** The other end portion of the power transmission hose **15** is coupled via a pressure-resistant penetrating part **31** to an electronic equipment container **30** having a metal pressure-resistant rigid structure storing the high-frequency power source **11** of the power transmission circuit 7 and other electronic equipment.

One end portion of the power reception hose **19** housing the lead wire **18** between the power reception coil **10** and the battery **E** is coupled to the back plate **28** of the power reception container **16.** The other end portion of the power reception hose **19** is coupled via a pressure-resistant penetrating part **33** to an electronic equipment container **32** having a metal pressure-resistant rigid structure storing the battery **E** of the power reception circuit **9** and other electronic equipment.

The power transmission hose **15** and the power reception hose **19** are made of a soft elastically-deformable material such as rubber or vinyl. The power transmission hose **15** and the power reception hose **19** have flexibility allowing inward and outward deformation due to a rise and fall of an external water pressure.

<Viscous Resin **D**>

The resin **D** will be described with reference to FIG. **1.** The power transmission coupler void space **20** and the power transmission hose void space **21** communicate with each other, and the viscous resin **D** is sealed therein. Similarly, the power reception coupler void space **22** and the power reception hose void space **23** communicate with each other, and the resin **D** is sealed therein.

As described above, in the internal storage space of the power transmission container **12,** the resin **D** is sealed in a remaining space of the power transmission coupler void space **20** other than the space occupied by the power transmission coil **8** and the first ferrite core **26** housed in the internal space. Similarly, in the internal storage space of the power reception container **16,** the resin **D** is sealed in a remaining space of the power reception coupler void space **22** other than the space occupied by the power reception coil **10** and the second ferrite core **29** stored in the internal space.

While the lead wire **14** is stored in the power transmission hose **15,** the resin **D** is sealed in a remaining space of the power transmission hose void space **21.** Similarly, while the lead wire **18** is stored in the power reception hose **19,** the resin **D** is sealed in a remaining space of the power reception hose void space **23.**

The power transmission coupler void space **20** and the power transmission hose void space **21** are allowed to communicate with each other and spatially connected. Similarly, the power reception coupler void space **22** and the power reception hose void space **23** are allowed to communicate with each other and spatially connected.

As described above, the common viscous resin **D** is sealed in the first to fourth void spaces **20** to **23.** Silicone resin or liquid epoxy resin is typically used as the viscous resin **D,** or other viscous resin materials may be employed. For example, the resin can be any resin selected from those in a near liquid state, a creamlike, rubberlike, or jellylike state, and a semicured state. The resin **D** may be a material being in a liquid state at the time of sealing and then increased in a degree of cure after sealing.

<Internal and External Pressure Equalizing Action of Resin **D**>

A pressure equalizing action of the viscous resin **D** will be described with reference to FIG. **1.** When an external water pressure rises, the power transmission hose **15** and the power reception hose **19** contract and deform, and accordingly, the power transmission hose void space 21 and the power reception hose void space 23 become smaller, so that the resin **D** is pressurized therein. As a result, the pressure is transmitted through the resin **D** sealed in the power transmission hose void space **21** and the power reception hose void space **23** to the resin **D** of the power transmission coupler void space **20** and the power reception coupler void space **22,** which increases the internal pressure of the power transmission coupler void space **20** and the power reception coupler void space **22.** This pressure transmitting function of the resin **D** can produce a pressure equalizing action of equalizing the internal and external pressures in each of the power transmission coupler **13** and the power reception coupler **17.**

More specifically, for example, in the deep sea, the high water pressure in the water (the sea) **B** causes the power transmission hose **15** and the power reception hose **19** to contract and deform radially inward in a recessed manner. The power transmission hose **15** and the power reception hose **19** are reduced in cross-sectional area, so that the internal volumes of the hoses **15, 19** become smaller. As a result, the resin **D** in the power transmission hose void space **21** and the power reception hose void space **23** is pressurized. The pressure is transmitted to the resin **D** in the power transmission coupler void space **20** and transmitted to the resin **D** in the power reception coupler void space **22** to pressurize the resin **D** in the power transmission coupler void space **20** and the resin **D** in the power reception coupler void space **22.** As a result, the pressure of the resin **D** sealed in the power transmission coupler void space **20** and the pressure of the resin **D** sealed in the power reception coupler void space **22** increase. As a result, the internal pressures of the power transmission coupler void space **20** and the power reception coupler void space **22** increase until the pressure becomes equal to the water pressure in the deep sea.

Due to the pressure equalizing action of the resin **D** described above, the internal and external pressures become uniform in each of the power transmission coupler **13** and the power reception coupler **17.** Therefore, a pressure difference is eliminated between the inside and outside of the power transmission container **12** and the power reception container **16.** This can prevent the power transmission container **12** and the power reception container **16** from being crushed by water pressure.

<Electrostatic Induction Coupling>

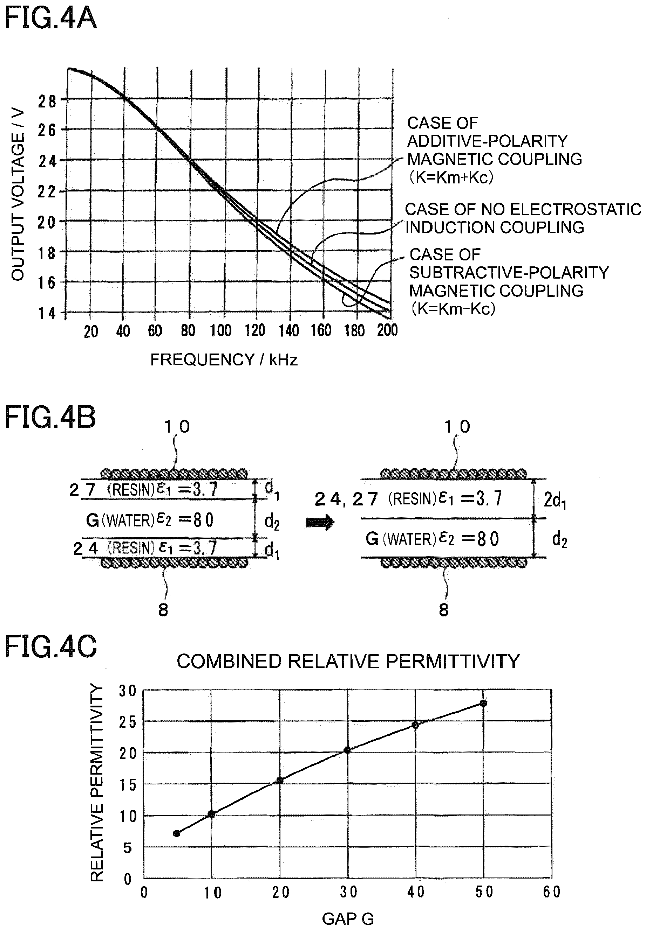

The electrostatic induction coupling during power supply in the water **B** with high permittivity will be described with reference to FIGS. **3A** to **3D** and **4A.** In the underwater non-contact power supply device **6,** the power transmission coil **8** and the power reception coil **10** employ additive-polarity magnetic coupling for the electromagnetic induction coupling during power supply. As a result, a coupling coefficient **Kc** corresponding to an electrostatic induction coupling component has a positive effect.

This will be described in detail. First, the power transfer by the underwater non-contact power supply device **6** is performed through the electromagnetic induction coupling between the power transmission coil **8** and the power reception coil **10.** Additionally, when the power transfer is performed in the water **B,** the relative permittivity of the water is very high (about **"80"** at **20** °C and about **"88"** at **0** °C), and therefore, as shown in FIG. **1,** the electrostatic induction coupling due to a capacitance **C** cannot be ignored.

The electromagnetic induction coupling between the power transmission coil **8** and the power reception coil **10** occurs in two ways, i.e., subtractive-polarity magnetic coupling when a subtractive-polarity magnetic coupling coil is used as shown in FIG. **3A** and additive-polarity magnetic coupling when an additive-polarity magnetic coupling coil is used as shown in FIG. **3B.** In this regard, a coupling coefficient Km corresponding to electromagnetic induction coupling is the same on land and in air. On the other hand, when the electrostatic induction coupling through the capacitance **C** becomes stronger as in the water **B,** the coupling coefficient **K** in the water **B** differs in sign (polarity) of action of the coupling coefficient **Kc** corresponding to the electrostatic induction coupling (component) as shown in FIGS. **3C** and **3D.**

As is known, when a winding wire of a coil is wound in subtractive polarity, a mutual inductance value is positive, so that the coupling coefficient is positive, and when the winding wire is wound in additive polarity, the mutual inductance value is negative, so that the coupling coefficient is negative. Regarding the coupling coefficient **K** in the water **B,** in the subtractive-polarity magnetic coupling shown in FIG. **3C, Kc** is negative and subtracted from **Km** as shown in Eq. **1** below. On the other hand, in the additive-polarity magnetic coupling of FIG. **3D, Kc** is positive and added to **Km** as shown in Eq. **2** below.

$$[\text{Mathematical } \mathbf{1}] \quad K = Km - Kc$$

$$[\text{Mathematical } \mathbf{2}] \quad K = Km + Kc$$

The above was confirmed by circuit analysis using FIGS. **3A** to **3D.** FIG. **4A** shows the result of the circuit analysis in the water **B,** and the following was confirmed by the circuit analysis with spice software (a PC program for analysis simulation of operation of an electronic circuit). Specifically, as the frequency increases, the output voltage of the power reception coil **10** drops. In the case of the additive-polarity magnetic coupling in the water **B** (K=Km+Kc), a degree of voltage drop is smaller as compared to the subtractive-polarity magnetic coupling in the water **B** (K=Km-Kc). Since the degree of voltage drop is smaller in the case of the additive-polarity magnetic coupling as described above, more electric power can be supplied.

The above was confirmed by experiments. Specifically, when additive-polarity magnetic coupling coils were used as the power transmission coil **8** and the power reception coil **10,** the coupling coefficient **K=0.374** was measured in the water (the sea) **B,** while the coupling coefficient **K** was **0.34** in the air (**K=0.34**). As described above, in the additive-polarity magnetic coupling, the electrostatic induction coupling by the capacitance **C** has a positive effect, and the degree of coupling can be increased by about **10** %.

Here, the experiments were performed under the following conditions. The gap **G** was **30** mm. In the air, the inductance of the power transmission coil **8** was **2.03** μH, and the inductance of the power reception coil **10** was **6.7** μH. In the water **B,** the inductance of the power transmission coil **8** was **1.913** μH, and the inductance of the power reception coil **10** was **6.816** μH.

As is well known, the coupling coefficient **K** is an important index affecting the performance of power transfer through the non-contact power supply. Specifically, the coupling coefficient **K** is an important factor for aiming at a reduction of power loss, securement of high output, large power supply, etc. The underwater non-contact power supply device **6** gains significant advantages of the positive effect of the electrostatic induction coupling component and the increase of the coupling coefficient **K** from the adoption of the additive-polarity magnetic coupling.

<Permittivity of Top Covers **24, 27**>

The relative permittivity of the top covers **24, 27** of the power transmission coupler **13** and the power reception coupler **17** will be described with reference to FIGS. **1, 4B, 4C,** etc. The power transmission container **12** of the power transmission coupler **13** and the power reception container **16** of the power reception coupler **17** have the respective top covers **24, 27,** and these top covers **24, 27** face each other during power supply. The top covers **24, 27** are made of a material having a relative permittivity of less than **10.** Therefore, the top covers **24, 27** can provide a function of reducing influences of the permittivity fluctuation of water due to a change in water temperature and the combined capacitance with water and thereby reduce the influences on the electrostatic induction coupling.

This will be described in detail. The relative permittivity of water is about **"80"** at **20** °C and is increased by about **10** % to about **"88"** at **0** °C. In this way, the permittivity of water sensitively reacts to a change in water temperature and significantly changes. For example, the water temperature of the deep sea or the seafloor **A** (see FIG. **2**) is **5** °C or less. It is desirable that the coupling coefficient **K** described above does not change due to such a change in water temperature. In other words, it is desirable to reduce the influence of the permittivity fluctuation of water due to a change in water temperature and to avoid the influence on the capacitance **C,** the electrostatic induction coupling, and the coupling coefficient **K.**

FIG. **4B** is a model diagram of a two-layer structure of the top covers **24, 27** made of a material having a relative permittivity $\varepsilon_1$ and water having a relative permittivity $\varepsilon_2$. In FIG. **4B,** preferably, the top covers **24, 27** are made of a non-conductive resin selected as a material having the relative permittivity $\varepsilon_1$ of an order of magnitude smaller than that of water. Typically, the permittivity $\varepsilon_1$ of the top covers **24, 27** is desirably set to less than **"10".** In the example shown in the figure, a Polypenco acetal resin having the permittivity $\varepsilon_1$ of **"3.7"** is employed.

A combined capacitance $C_0$ is represented by Eq. **3** below. A combined relative permittivity $\varepsilon_S$ of water and the top covers **24, 27** is represented by Eq. **4** below and is as shown in the graph of FIG. **4C.**

[Mathematical 3]

$$C_0 = \frac{\varepsilon_1 \cdot \varepsilon_2}{d_2 \cdot \varepsilon_1 + 2d_1 \cdot \varepsilon_2} \varepsilon_0 \cdot S$$

[Mathematical 4]

$$\varepsilon_S = \frac{\varepsilon_2 (2d_1 + d_2)}{2d_1 \dfrac{\varepsilon_2}{\varepsilon_1} + d_2}$$

In Eqs. **3** and **4, S** is the area of the power transmission coil **8** and the power reception coil **10**; $\varepsilon_0$ is the permittivity of vacuum; $\varepsilon_1$ is the relative permittivity of the top covers **24, 27** (**"3.7"** in the example shown in the figure); $\varepsilon_2$ is the relative permittivity of water (e.g., **"80"**); **"d_1"** is a thickness of each of the top covers **24, 27**; and **"d_2"** is a distance of water.

A sum **"2d_1"** of the thickness of the top covers **24, 27** is constant (**5 mm** in the example shown in the figure). The distance **"d_2"** of water corresponds to the gap **G.** In the graph of FIG. **4C,** a change in the combined capacitance $C_0$ is equivalently represented as a change in the combined relative permittivity $\varepsilon_S$ when the gap **G** (the distance **"d2"** of water) is changed.

Referring to FIG. **4C,** the combined relative permittivity $\varepsilon_S$ of water and the two top covers **24, 27** has a value equal to or less than **1/3** of the relative permittivity **"80"** of water. This means that the change in the combined capacitance $C_0$ due to a change in water temperature is **1/3** or less of the change in the case of water only. For example, when the sum **"2d_1"** of the thickness of the two top covers **24, 27** is **5 mm** as in the example shown in the figure, and the gap **G** (the distance **"d_2"** of water) is set to the same level, the combined relative permittivity $\varepsilon_S$ is **"7.1".** This means that, in such a gap **G,** the permittivity of water hardly affects the combined relative permittivity $\varepsilon_S$ and the combined capacitance $C_0$. As described above, the top covers **24, 27** provide a function of significantly reducing the change in the combined capacitance $C_0$ due to a change in water temperature.

Even though the permittivity of water changes due to a change in water temperature, the influence on the capacitance **C** and the electrostatic induction coupling can significantly be reduced when the relative permittivity of the top covers **24, 27 is** less than **"10"** (if the relative permittivity is **"10"** or more, an influence on the relative permittivity of water appears). As a result, an influence on the coupling coefficient **K** due to a change in water temperature can be avoided.

A typical application example of the underwater non-contact power supply device **6** is as follows.

(1) In the water **B,** electric power is supplied from the power transmission coil **8** of the power transmission circuit **7** to the power reception coil **10** of the power reception circuit 9 without contact (FIG. **1**). In a representative example, the electric power is supplied from the mother ship **3** and the ROV **5** to the seafloor power source base **2.** The electric power is then supplied from the seafloor power source base **2** to the AUV **1** (FIG. **2**).

(2) Electric power is transferred from the power transmission coil **8** in the power transmission coupler **13** to the power reception coil **10** in the power reception coupler **17.** The power transmission hose **15** provided with the lead wire **14** is coupled to the power transmission coupler **13**. The power reception hose **19** provided with the lead wire **18** is coupled to the power reception coupler **17** (FIG. **1**).

(3) In the power supply in the deep sea or on the seafloor **A** at, the high water pressure is equalized by the viscous resin **D** in terms of the internal and external pressures of the device. The resin **D** is sealed in the device, and the pressure is transmitted by the resin **D** from the second and fourth void spaces **21, 23** in the power transmission hose **15** and the power reception hose **19** toward the first and third void spaces **20, 22** in the power transmission coupler **13** and the power reception coupler **17,** respectively. As a result, the internal and external pressures of the power transmission coupler **13** and the power reception coupler **17** become equal (FIG. **1**)**.** The internal and external pressure equalizing action of the resin **D** can make the power transmission coupler **13** and the power reception coupler **17** pressure-resistant to high water pressure even though the couplers are small and lightweight.

In this regard, the pressure-resistant penetrating parts **31, 33** of the power transmission hose **15** and the power reception hose **19** need to have mechanical strength that may withstand the pressure transmitted from the resin **D.**

(4) The power transmission coil **8,** the power reception coil **10,** the lead wires **14, 18,** etc. generate heat during the power supply. Such heat is directly transmitted to the resin **D** sealed in each of the void spaces **20, 22, 21, 23** of the power transmission coupler **13,** the power reception coupler **17,** the power transmission hose **15,** and the power reception hose **19** (FIG. 1). The resin **D** radiates heat into the outside water (the sea) **B** via the power transmission coupler **13,** the power reception coupler **17,** the power transmission hose **15,** and the power reception hose **19** (FIG. **2**). The underwater non-contact power supply device **6** with the sealed resin **D** is excellent in cooling ability.

(5) The non-contact power supply is generally performed through the electromagnetic induction coupling between the power transmission coil **8** and the power reception coil **10**. Additionally, the underwater non-contact power supply device **6** employs the additive-polarity magnetic coupling (FIGS. **3A** to **3D**), which can allow the coupling coefficient **Kc** of the electrostatic induction coupling component corresponding to the capacitance **C** to have a positive effect (see FIGS. **4A**). This means that the electrostatic induction coupling can effectively be used for the coupling coefficient **K,** which is an important index of the power supply performance.

(6) The permittivity of water significantly changes due to a change in water temperature. The temperature is low in the deep sea and on seafloor **A.** In the underwater non-contact power supply device **6,** the top covers **24, 27** of the power transmission coupler 13 and the power reception coupler **17** are made of a material having a relative permittivity of less than **"10",** and this can reduce the influence of a change in the permittivity of water due to a change in water temperature and the influences on the combined relative permittivity $\varepsilon_S$ and the combined capacitance $C_0$ with water. Additionally, the influence on the electrostatic induction coupling of the power transmission coil **8** and the power reception coil **10** can be reduced. As a result, the coupling coefficient **K** can be prevented from changing due to a change in water temperature (FIGS. **4B** and **4C**).

<Modifications>

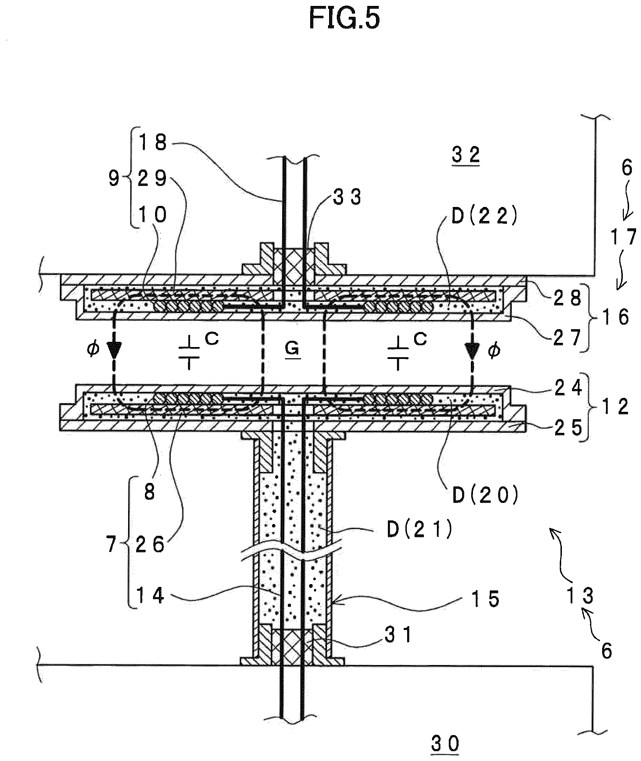

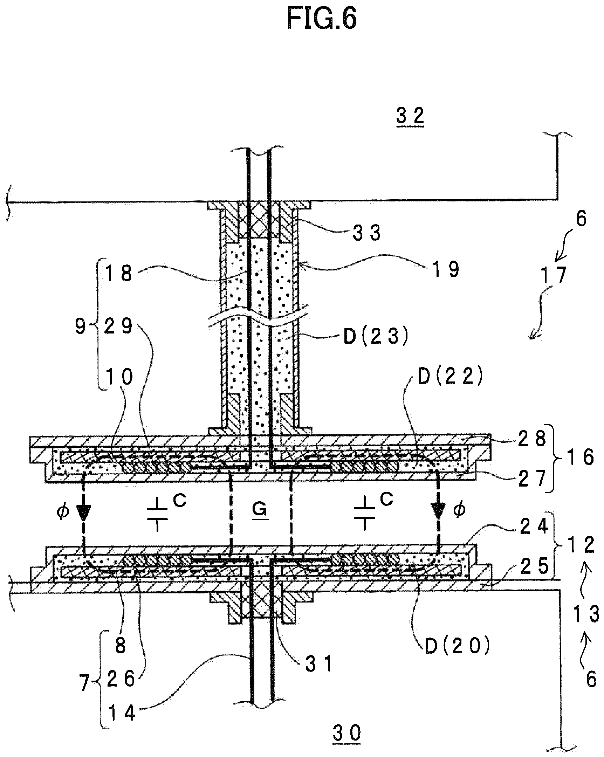

FIGS. **5** and **6** show respective modifications of the present invention. In the example shown in FIGS. **1** and **2,** the underwater non-contact power supply device **6** has the power transmission hose **15** and the power reception hose **19.** In the modifications shown in FIGS. **5** and **6,** only one of the power transmission hose **15** and the power reception hose **19** is included. In a first modification of FIG. **5,** the device has only the power transmission hose **15** without the power reception hose **19.** In a second modification of FIG. **6,** the device has only the power reception hose **19** without the power transmission hose **15.**

The first modification (FIG. **5**) is applied, for example, when electric power is supplied from the seafloor power source base **2** to the AUV **1.** The second modification (FIG. **6**) is applied, for example, when electric power is supplied from the ROV **5** to the seafloor power source base **2** (FIG. **2**).

In the first modification (FIG. **5**), only the power transmission coupler void space **20** in the power transmission coupler **13** and the power transmission hose void space **21** in the power transmission hose **15** are allowed to communicate with each other and have the resin **D** sealed therein. In the second modification (FIG. **6**), only the power reception coupler void space **22** in the power reception coupler **17** and the power reception hose void space **23** in the power reception hose **19** are allowed to communicate with each other and have the resin **D** sealed therein.

In the first modification (FIG. **5**), the viscous resin **D** is also sealed in the power reception coupler void space **22** in the power reception container **16** in which the power reception coil **10** is stored. In the second modification (FIG. **6**), the resin **D** is also sealed in the power transmission coupler void space **20** in the power transmission container **12** in which the power transmission coil **8** is stored.

As described above, the power reception coupler **17** of the first modification (FIG. **5**) without the power reception hose **19** coupled thereto and the power transmission coupler **13** of the second modification (FIG. **6**) without the power transmission hose **15** coupled thereto has the viscous resin **D** sealed in the power reception coupler void space **22** or the power transmission coupler void space **20,** and the resin **D** provides the function of equalizing internal and external pressures associated with a change in external water pressure. Specifically, the containers **12,16** can flexibly deform inward and outward due to changes in the external water pressure, and the external water pressure is transmitted to the resin **D** sealed therein, so that the internal pressure is equalized to the external pressure. Therefore, a difference between the internal and external pressures is eliminated by the deformable containers **12, 16** and the resin **D** sealed therein. Such a pressure equalizing action can make the power transmission coupler **13** and the power reception coupler **17** pressure-resistant to the high water pressure.

The power reception coupler **17** of the first modification (FIG. **5**) without the power reception hose **19** (FIG. **1**) coupled thereto has the back plate **28** of the power reception container **16** integrally coupled to the electronic equipment container **32** having a pressure-resistant rigid structure with mechanical strength. The lead wire **18** from the power reception coil **10** is connected to the power reception circuit **9** in the electronic equipment container **32** via a connector for penetrating the electronic equipment container **32** having a pressure-resistant rigid structure, i.e., the pressure-resistant penetrating part **33.**

The power transmission coupler **13** of the second modification (FIG. **6**) without the power transmission hose **15** (FIG. **1**) coupled thereto has the back plate **25** of the power transmission container **12** integrally coupled to the electronic equipment container **30** having a pressure-resistant rigid structure with mechanical strength. The lead wire **14** from the power transmission coil **8** is connected to the power transmission circuit **7** in the electronic equipment container **30** via a connector for penetrating the electronic equipment container **30** having a pressure-resistant rigid structure, i.e., the pressure-resistant penetrating part **31.**

| **1** | AUV |
| **2** | seafloor power source base |
| **3** | mother ship |
| **4** | cable |
| **5** | ROV |
| **6** | underwater non-contact power supply device |
| **8** | power transmission coil |
| **10** | power reception coil |
| **12** | power transmission container |
| **13** | power transmission coupler |
| **14** | lead wire |
| **15** | power transmission hose |
| **16** | power reception container |
| **17** | power reception coupler |
| **18** | lead wire |
| **19** | power reception hose |
| **20** | power transmission coupler void space |
| **21** | power transmission hose void space |
| **22** | power reception coupler void space |
| **23** | power reception hose void space |

**24**   power transmission top cover

**27**   power reception top cover

**30**   electronic equipment container

**31**   pressure-resistant penetrating part

**32**   electronic equipment container

**33**   pressure-resistant penetrating part

**A**   seafloor

**B**   water (sea)

**D**   viscous resin

**E**   battery

**Claims**

1.   An underwater non-contact power supply device (6) supplying electric power from a power transmission coil (8) of a power transmission circuit (7) to a power reception coil (10) of a power reception circuit (9) in water while the power transmission coil (8) and the power reception coil (10) are close to and facing each other with a gap (G) formed between the power transmission coil (8) and the power reception coil (10), the underwater non-contact power supply device (6) comprising:

   a power transmission coupler (13) including a power transmission container (12) housing the power transmission coil (8);
   a power transmission hose (15) coupled to the power transmission container (12) and housing a power transmission lead wire (14) of the power transmission coil (8);
   a power reception coupler (17) including a power reception container (16) housing the power reception coil (10); and
   a power reception hose (19) coupled to the power reception container (16) and housing a power reception lead wire (18) of the power reception coil (10), wherein
   a power transmission coupler void space (20) in the power transmission coupler (13) and a power transmission hose void space (21) in the power transmission hose (15) are allowed to communicate with each other, wherein
   a viscous resin (D) is sealed in each of the power transmission coupler void space (20) and the power transmission hose void space (21), wherein
   a power reception coupler void space (22) in the power reception coupler (17) and a power reception hose void space (23) in the power reception hose (19) are allowed to communicate with each other, and wherein a viscous resin (D) is sealed in each of the power reception coupler void space (22) and the power reception hose void space (23),
   or
   the underwater non-contact power supply device (6) not comprising the power transmission hose (15) or the power reception hose (19).

2.   The underwater non-contact power supply device according to claim 1, wherein
   the power transmission coil (8) and the power reception coil (10) are made up of coils forming additive-polarity magnetic coupling at the time of electromagnetic induction coupling during power supply, and wherein
   a coupling coefficient (K) between the power transmission coil (8) and the power reception coil (10) during power supply in water has a value obtained by adding an electrostatic induction coupling coefficient (Kc) corresponding to a capacitance (C) to a coupling coefficient (Km) corresponding to electromagnetic induction coupling between the power transmission coil (8) and the power reception coil (10).

3.   The underwater non-contact power supply device according to claim 1 or 2, wherein

the power transmission container (12) includes a power transmission top cover (24), wherein
the power reception container (16) includes a power reception top cover (27), wherein the power transmission top cover (24) and the power reception top cover (27) constitute surfaces facing each other when the power transmission coil (8) and the power reception coil (10) face each other during power supply, wherein
the power transmission top cover (24) and the power reception top cover (27) are made of a material having a relative permittivity less than "10", and wherein
a fluctuation in permittivity of water due to changes in water temperature and a fluctuation in combined capacitance with water are consequently reduced so as to reduce an influence on electrostatic induction coupling between the power transmission coil (8) and the power reception coil (10) during power supply.

4. The underwater non-contact power supply device according to any one of claims 1 to 3, wherein
   the viscous resin (D) is made of a silicone resin or a liquid epoxy resin.

5. The underwater non-contact power supply device according to any one of claims 1 to 4, comprising the power transmission hose (15) and the power reception hose (19).

6. The underwater non-contact power supply device according to claim 5, wherein the power transmission hose (15) and the power reception hose (19) have flexibility allowing radial deformation due to a change in water pressure in water.

7. The underwater non-contact power supply device according to claim 6, wherein
   when the power transmission hose (15) and the power reception hose (19) radially contract due to a rise in water pressure in water, the viscous resin (D) transmits a pressure from the power transmission hose void space (21) to the power transmission coupler void space (20) to increase the internal pressure of the power transmission coupler void space (20), while the viscous resin (D) transmits a pressure from the power reception hose void space (23) to the power reception coupler void space (22) to increase the internal pressure of the power reception coupler void space (22), so that the viscous resin (D) provides a pressure equalizing function of equalizing the internal and external pressures of the power transmission coupler (13) and the power reception coupler (17).

8. The underwater non-contact power supply device according to any one of claims 1 to 4, wherein the power transmission hose (15) is not included.

9. The underwater non-contact power supply device according to claim 8, wherein
   the power transmission container (12) of the power transmission coupler (13) has a flexibility allowing inward and outward deformation, wherein
   the power transmission container (12) is integrally coupled to an electronic equipment container having a pressure-resistant rigid structure with mechanical strength, and wherein
   the power reception hose (19) has flexibility allowing radial deformation due to a change in water pressure in water.

10. The underwater non-contact power supply device according to claim 9, wherein
    when the power reception hose (19) radially contracts due to a rise in water pressure in water, the viscous resin (D) transmits a pressure from the power reception hose void space (23) to the power reception coupler void space (22) to increase the internal pressure of the power reception coupler void space (22), so that the viscous resin (D) provides a pressure equalizing function of equalizing the internal and external pressures of the power reception coupler (17).

11. The underwater non-contact power supply device according to any one of claims 1 to 4, wherein the power reception hose (19) is not included.

12. The underwater non-contact power supply device according to claim 11, wherein
    the power reception container (16) of the power reception coupler (17) has a flexibility allowing inward and outward deformation, wherein
    the power reception container (16) is integrally coupled to an electronic equipment container having a pressure-resistant rigid structure with mechanical strength, and wherein
    the power transmission hose (15) has flexibility allowing radial deformation due to a change in water pressure in water.

13. The underwater non-contact power supply device according to claim 12, wherein
    when the power transmission hose (15) radially contracts due to a rise in water pressure in water, the viscous resin (D) transmits a pressure from the power transmission hose void space (21) to the power transmission coupler void space (20) to increase the internal pressure of the power transmission coupler void space (20), so that the viscous resin (D) provides a pressure equalizing function of equalizing the internal and external pressures of the power transmission coupler (13).

# FIG.1

# FIG.2

FIG.3A

FIG.3B

FIG.3C

$$K = Km - Kc$$

FIG.3D

$$K = Km + Kc$$

## FIG.4A

OUTPUT VOLTAGE / V (28, 26, 24, 22, 20, 18, 16, 14)

FREQUENCY / kHz (20, 40, 60, 80, 100, 120, 140, 160, 180, 200)

CASE OF ADDITIVE-POLARITY MAGNETIC COUPLING (K=Km+Kc)

CASE OF NO ELECTROSTATIC INDUCTION COUPLING

CASE OF SUBTRACTIVE-POLARITY MAGNETIC COUPLING (K=Km−Kc)

## FIG.4B

1 0

2 7 (RESIN) $\varepsilon_1 = 3.7$ — $d_1$

G (WATER) $\varepsilon_2 = 8 0$ — $d_2$

2 4 (RESIN) $\varepsilon_1 = 3.7$ — $d_1$

8

2 4, 2 7 (RESIN) $\varepsilon_1 = 3.7$ — $2d_1$

G (WATER) $\varepsilon_2 = 8 0$ — $d_2$

8

## FIG.4C

COMBINED RELATIVE PERMITTIVITY

RELATIVE PERMITTIVITY (30, 25, 20, 15, 10, 5, 0)

GAP G (0, 10, 20, 30, 40, 50, 60)

# FIG.5

# FIG.6

Europäisches
Patentamt

European
Patent Office

Office européen
des brevets

# EUROPEAN SEARCH REPORT

Application Number

EP 20 16 2769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2016 201534 A (SHOWA AIRCRAFT IND) 1 December 2016 (2016-12-01) * the whole document * * | 1-13 | INV. H02J50/10 |
| A | JP 2018 170480 A (PANASONIC CORP) 1 November 2018 (2018-11-01) * paragraph [0046] - paragraph [0056]; figure 3a * | 1-13 | |

TECHNICAL FIELDS
SEARCHED        (IPC)

H02J
H01B
H02B
H01F

The present search report has been drawn up for all claims

| Place of search | Date of completion of the search | Examiner |
|---|---|---|
| Munich | 10 July 2020 | Lindquist, Jim |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## EP 3 852 236 A1

### ANNEX TO THE EUROPEAN SEARCH REPORT
### ON EUROPEAN PATENT APPLICATION NO.

EP 20 16 2769

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2020

| Patent document cited in search report | | Publication date | Patent family member(s) | | Publication date |
|---|---|---|---|---|---|
| JP 2016201534 | A | 01-12-2016 | JP | 6497813 B2 | 10-04-2019 |
| | | | JP | 2016201534 A | 01-12-2016 |
| JP 2018170480 | A | 01-11-2018 | JP | 6568133 B2 | 28-08-2019 |
| | | | JP | 2018170480 A | 01-11-2018 |
| | | | WO | 2018180355 A1 | 04-10-2018 |

EPO FORM P0459

For more details about this annex : see Official Journal of the European Patent Office, No. 12/82

**EP 3 852 236 A1**

**Patent documents cited in the description**

- JP 2012016106 A

- JP 2012143106 A